# EUROPEAN PATENT APPLICATION

(11) **EP 4 507 261 A1**
(43) Date of publication of application: **12.02.2025**
(21) Application number: 24193452.0
(22) Date of filing: 07.08.2024
(51) Int. Cl.: H04L 41/16, H04L 41/0823, H04L 41/50, H04W 4/60, H04W 24/02, G06N 20/00

(54) **METHODS AND APPARATUS OF GENERAL FRAMEWORK FOR DATA COLLECTION WITHOUT RAN AWARENESS**

(30) Priority: 08.08.2023 WO PCT/CN2023/111753; 01.07.2024 CN 202410879182
(71) Applicant: MediaTek Singapore Pte. Ltd., Singapore 138628 (SG)
(72) Inventor: PENG, Yao, Beijing (CN); ZHANG, Yuanyuan, Beijing (CN); BI, Hao, San Jose, California (US); ZHANG, Xiaonan, Beijing (CN)
(74) Representative: Pfenning, Meinig & Partner mbB

(57) **Abstract**

Apparatus and methods are provided for data collection general framework for AI-ML model training. In one novel aspect, the UE server sends the data collection request/triggering to UE through the application layer without network involvement with the general frame for data collection including data collection triggering, data collection configuration, measurements, and data delivery. In one embodiment, the assistance information is received from the RAN node with unicast or groupcast. In another embodiment, the UE delivers assistance information with the collected AI-ML model related data to deliver to the UE server. In one novel aspect, the UE server initiates a data collection request destined to the one or more UEs and receives one or more data collection responses and AI-ML model related data and assistance information through a data tunnel connected with the wireless network.

## Description

### CROSS REFERENCE TO RELATED APPLICATIONS

### TECHNICAL FIELD

The disclosed embodiments relate generally to wireless communication, and, more particularly, to data collection without radio access network (RAN) awareness.

### BACKGROUND

Artificial Intelligence (AI) and Machine Leaning (ML) have been widely used in wireless networks to improve performance, user experience, and reduce complexity/overhead. In the conventional network of the 3rd generation partnership project (3GPP) 5G new radio (NR), AI/ML technology is leveraged to address challenges due to the increased complexity of foreseen deployments over the air interface, both for the network and UEs. Data collection is a crucial step in AI/ML life cycle management (LCM), which provides the foundation for creating effective and accurate models.

In wireless AI technology, offline training is the most feasible option and serves as the foundation for wireless AI. Regarding user equipment (UE)-side models, the training can take place on the UE-side or a neutral site. However, it is not practical to perform UE-side model training within the UE due to the lack of a suitable training environment. This includes but is not limited to data availability, storage capacity, computational capacity, and compilation capabilities. For effective offline model training, the data collection solution should be designed to "reach" the UE-side or a neutral site, such as over the top (OTT) server. And a large amount of non-standardized/proprietary data should be collected that can be tailored to various UE internal/external conditions and design choices (e.g., UE resource constraints, radio environment, feature engineering). Besides, the collected data should be sufficient for well model generalization.

Improvements and enhancements are required for data collection without RAN awareness.

### SUMMARY

Apparatus and methods are provided for data collection general framework for AI-ML model training. In one novel aspect, general frame for data collection includes data collection triggering, data collection configuration, measurements, and data delivery. In one embodiment, the OTT server (UE server) sends the data collection request/triggering to UE through the application layer without network involvement. The UE server is a UE-side OTT server, a network-side OTT server or a neutral site OTT server. In one embodiment, the UE receives a data collection request initiated by a UE server, obtains data collection configuration from the RAN node, wherein the data collection configuration configures AI-ML model related parameters for the UE, performs data collection to collect the AI-ML related data based on the data collection configuration, and delivers the collected AI-ML model related data destined to the UE server through a delivery tunnel. In one embodiment, the UE receives the data collection request directly from the UE server through an application layer message, and wherein the delivery tunnel is established between the UE and the UE server. In another embodiment, the UE sends a UE data request to the RAN node and receives the data collection configuration and assistance information from the RAN node. In one embodiment, the assistance information includes one or more elements comprising: use case for the AI-ML model related data, functionality of the AI-ML model related data, scenario information, location information, and RAN configuration information for the AI-ML model related data. In one embodiment, the assistance information is received from the RAN node with unicast or groupcast. In another embodiment, the UE delivers assistance information with the collected AI-ML model related data to deliver to the UE server. In yet another embodiment, the delivery tunnel established between the UE and the UE server is a user plane (UP) tunnel or a control plane (CP) tunnel. In one embodiment, the UE receives the data collection configuration together with a data collection trigger from the RAN node, and wherein the delivery tunnel includes a data path established between the UE and the network entity and a tunnel between the network entity and the UE server. In another embodiment, the data path between the UE and the network entity is a CP tunnel through a Non-Access-Stratum (NAS) layer or a UP tunnel through an application layer. In one embodiment, the UE receives the data collection request with assistance information from a network entity of the wireless network.

In one novel aspect, the UE server initiates a data collection request destined to the one or more UEs, wherein the data collection request initiates data collection by the one or more UEs for AI-ML model used by the one or more UEs, receives one or more data collection responses and AI-ML model related data and assistance information through a data tunnel connected with the wireless network. In one embodiment, the data collection request is sent to the one or more UEs directly through an application layer message or to a network entity of the wireless network. In another embodiment, the assistance information is attached to the AI-ML model related data by corresponding UEs or by a network entity of the wireless network. In one embodiment, the data tunnel is a direct user plane (UP) tunnel with corresponding UE, a direct control plane (CP) tunnel with corresponding UE, a UP tunnel with a network entity together with a data path to corresponding UE, or a CP tunnel with a network entity together with a data path to corresponding UE.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network that supports data collection in accordance with embodiments of the current invention.
Figure 2 illustrates diagrams for an exemplary process of the data collection to the UE server without RAN awareness in accordance with embodiments of the current invention.
Figure 3 illustrates an exemplary flow of data collection triggering from the UE server to UE without a network node involvement in accordance with embodiments of the current invention.
Figure 4 illustrates an exemplary process of data collection triggering from the UE server to the CN in accordance with embodiments of the current invention.
Figure 5 illustrates an exemplary flow of data collection without RAN awareness triggering from the UE server to the CN entity and from the UE server to UE in accordance with embodiments of the current invention.
Figure 6 illustrates an exemplary flow chart for the UE to perform the AI-ML data collection in accordance with embodiments of the current invention.
Figure 7 illustrates an exemplary flow chart for the UE server to perform the AI-ML data collection in accordance with embodiments of the current invention.

### DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc. (Collectively referred to as "elements"). These elements may be implemented using electronic hardware, computer software, or any combination thereof. Whether such elements are implemented as hardware or software depends upon the particular application and design constraints imposed on the overall system.

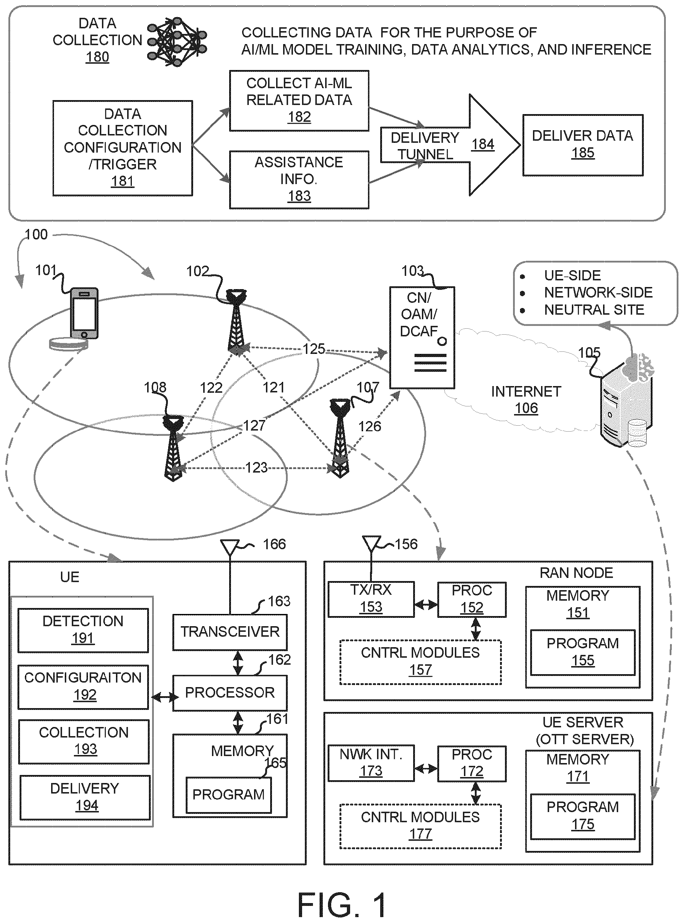

Figure 1 is a schematic system diagram illustrating an exemplary wireless network that supports data collection in accordance with embodiments of the current invention. Wireless communication network 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 102, gNB 107 and gNB 108 are base stations in the wireless network, the serving area of which may or may not overlap with each other. gNB 102 is connected with gNB 107 via Xn interface 121. gNB 102 is connected with gNB 108 via Xn interface 122. gNB 107 is connected with gNB 108 via Xn interface 123. Core network (CN) entity 103 connects with gNB 102 and 107, through NG interface 125 and 126, respectively. Network entity CN 109 connects with gNB 108 via NG connection 127. Exemplary CN 103 and CN 109 connect to AI server 105 through internet 106. CN 103 and CN 109 includes core components such as user plane function (UPF) and access and mobility management function (AMF). In one embodiment, AI server 105 is a UE server. According to some examples, the UE server can be inside of a mobile network operator (MNO). According to some other examples, the UE server can be outside of the MNO, and it can be also referred as an over-the-top (OTT) server. In one example, the UE server is a UE-side OTT server. In another example, the UE server is a network-side OTT server or a neutral site OTT server. Please note that some of the following examples are described in the context of OTT server, but they can also be applied to other types of UE server.

Figure 1 further illustrates general data collection framework for the UE(s), the RAN nodes/gNB(s), the CN, and the AI server, such as an OTT server, respectively. CN 103 is the backbone of the wireless network and communicates with the UE server via internet 106. In one embodiment, CN 103 includes the network node/entity/function, such as data collection application function (DCAF), core network (CN), operations, administration, and maintenance (OAM), etc.

In one novel aspect 180, UE performs data collection for AI-ML model. Data collection is a process of collecting data by the network nodes, management entity, UE-side server, or neutral server for the purpose of AI/ML model training, data analytics, and inference. Data collection allows data to reach the UE-side or the neutral site (i.e., UE server), and collect sufficient data for model generalization. At step 181, the UE obtains data collection configuration / trigger. At step 182, the UE collects AI-ML related data. At step 184, the UE establishes a data delivery tunnel for the AI-ML related data delivery. At step 185, the UE delivers the AI-ML related data through the established tunnel. In one embodiment, at step 183, the UE obtains the assistance information and delivers the assistance information and the AI-ML related data through the established tunnel.

Figure 1 further illustrates simplified block diagrams of a RAN node / base station, a UE server and a mobile device/UE that supports data collection. The gNB / RAN node has an antenna 156, which transmits and receives radio signals. An RF transceiver circuit 153, coupled with the antenna 156, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 107. Memory 151 stores program instructions and data 155 to control the operations of the base station/gNB. The base station / gNB also includes a set of control modules 157 that carry out functional tasks to communicate with mobile stations. These control modules can be implemented by circuits, software, firmware, or a combination of them.

Figure 1 also includes simplified block diagrams of a UE, such as UE 101. The UE may also be referred to as a mobile station, a mobile terminal, a mobile phone, a smart phone, a wearable device, an IoT device, a tablet, a laptop, or other terminology used in the art. The UE performs functions perform data collection for AI-ML model training and includes modules of detection module, configuration module, collection module and delivery module. UE interacts with gNB through the air interface. The UE has an antenna 166, which transmits and receives radio signals. An RF transceiver circuit 163, coupled with the antenna, receives RF signals from antenna 166, converts them to baseband signals, and sends them to processor 162. RF transceiver 163 also converts received baseband signals from processor 162, converts them to RF signals, and sends out to antenna 166. Processor 162 processes the received baseband signals and invokes different functional modules to perform features in UE 101. Memory 161 stores program instructions and data 165 to control the operations of UE 101. Antenna 166 sends uplink transmission and receives downlink transmissions to/from antenna 156 of the base station / gNB.

The UE also includes a set of control modules that carry out functional tasks. These control modules can be implemented by circuits, software, firmware, or a combination of them. A detection module 191 receives a data collection request initiated by a UE server, wherein the UE is connected with a radio access network (RAN) node of the wireless network. A configuration module 192 obtains data collection configuration from the RAN node, wherein the data collection configuration configures AI-ML model related parameters for the UE. A collection module 193 performs data collection to collect AI-ML model related data based on the data collection configuration. A delivery module 194 that delivers the collected AI-ML model related data destined to the UE server through a delivery tunnel.

Figure 1 also includes simplified block diagrams of an UE server, such as UE server 105. The UE server has a network interface module 173, which transmits and receives signals / message through the network. Processor 172 processes the received messages and invokes different functional modules to perform features in the UE server. Memory 171 stores program instructions and data 175 to control the operations of the UE server. The UE server also includes a set of control modules 177 that carry out functional tasks to communicate with mobile stations. These control modules can be implemented by circuits, software, firmware, or a combination of them.

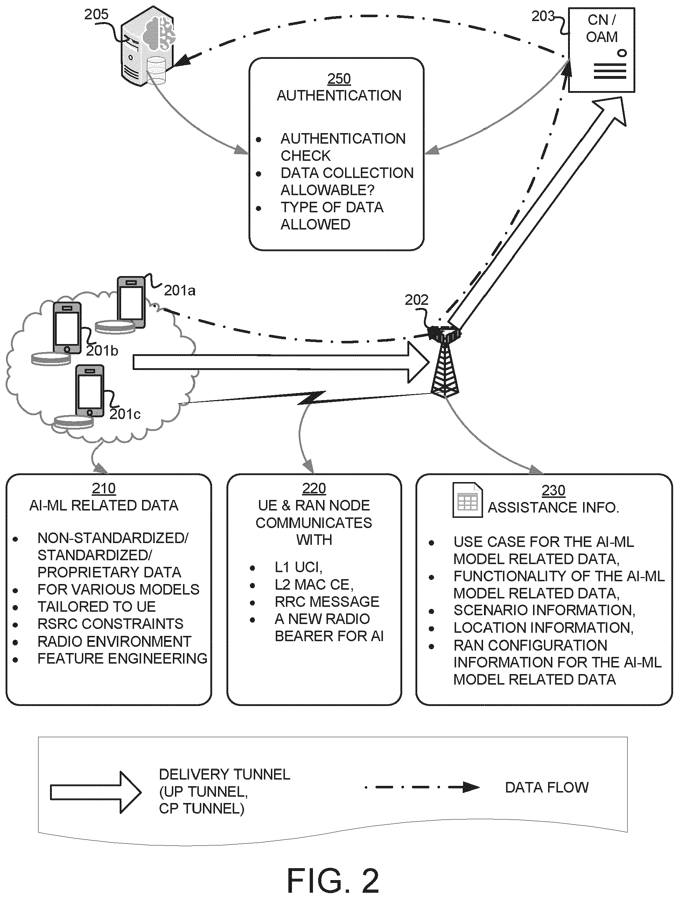

Figure 2 illustrates diagrams for an exemplary process of the data collection to the UE server without RAN awareness in accordance with embodiments of the current invention. One or more UEs, such as UEs 201a, 201b, and 201c, connect with a RAN node/gNB 202. gNB 202 connects with the core network 203. Core network 203 includes network functions and/or entities, such as DCAF, OAM and other network functions/entities. Core network 203 connects with an UE server 205. In one embodiment, the data flows from UE 201a /201b/201c to the UE server 205. In one embodiment, the data is delivered from UE to a network entity/function in CN 203, which forwards the data to the UE server 205. In one embodiment, the data delivery tunnel is the user plane (UP) tunnel. In another embodiment, the data delivery tunnel from the UE to the network entity/function in CN 203 and from the network entity/function in CN 203 to the UE server 205 is through control plane (CP) tunnel. In one embodiment 210, the AI-ML related data collected are non-standardized / standardized / proprietary data for various models tailored to UE internal and/or external conditions and design choices. In one embodiment, the design choices include UE resource constraints, radio environment, and/or feature engineering. In one embodiment, the UE collects AI-ML model related data. The collected data includes one or more elements including model input, model ground-truth, quality of the data, and other information, e.g., AI-ML model related data for AI-ML model generalization. At one embodiment 220, the UE communicates with the RAN node / gNB for data collection configuration and optionally assistance information. The UE and RAN node can communicate through a layer-1 (L1) UCI, a L2 MAC control element (CE), a radio resource control (RRC) message, or a new radio bearer for the AI. In one embodiment 230, assistance information is also delivered to the UE server. The assistance information includes one or more elements comprising use case for the AI-ML model related data, functionality of the AI-ML model related data, scenario information, location information, and RAN configuration information for the AI-ML model related data. In one embodiment 250, authentication is performed for the AI-ML related data delivery. The authentication can be performed by the core network entity/function, the OAM, or the UE server. In one embodiment, the network node/entity/function (e.g., DCAF, CN, OAM, etc.) performs authorization check and determine whether data collection and data delivery to the UE server is allowed or not. In one embodiment, the network node/entity/function (e.g., DCAF, CN, OAM, etc.) also determines what types of data are allowed to be collected and delivered to the UE server.

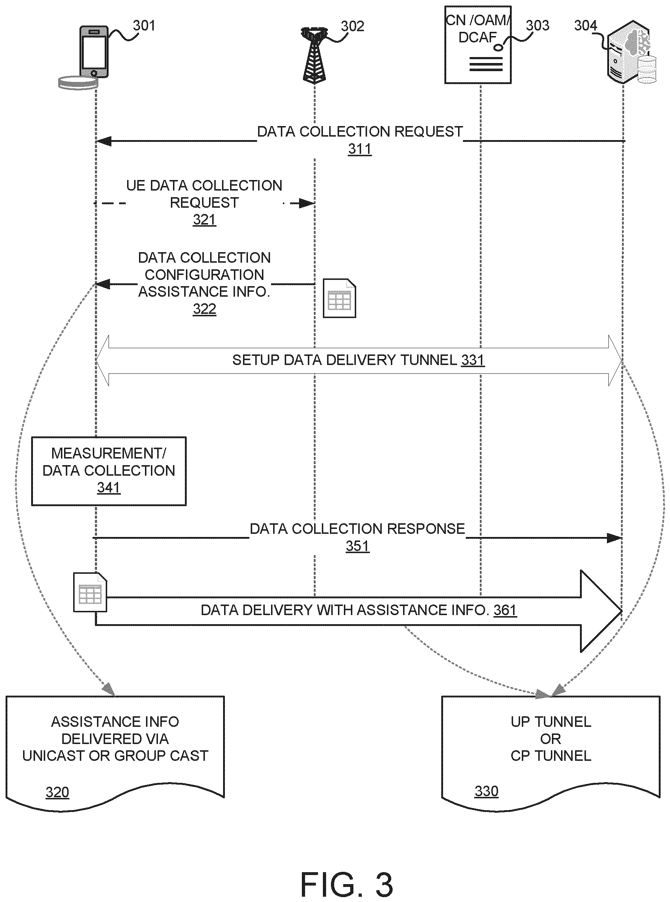

Figure 3 illustrates an exemplary flow of data collection triggering from the UE server to UE without a network node involvement in accordance with embodiments of the current invention. In one embodiment, the data collection triggering/request is from the UE server to UE through the application layer. UE 301 connects with RAN node 302 and CN 303, which connects with an UE server 304. At step 311, UE server 304 sends data collection request directly to UE 301. In one embodiment, the data collection request is sent through an application layer message. In one embodiment, at step 321, UE 301 further sends the data collection request to RAN node 302. In one embodiment, the data collection request is indicated from the application layer to RRC layer, through which data collection request is sent from the UE to network. In one embodiment, the data collection request to the RAN node can be L1/L2 signalling. In one embodiment, at step 322, RAN node 302 provides data collection configuration/assistance information replying on UE requests. In one embodiment 320, the data collection configuration and/or the assistance information is delivered by RAN node 302 through unicast or groupcast. In one embodiment, the RAN node provides data collection configuration/ assistance information for each UE. In one embodiment, the RAN node provides data collection configuration/ assistance information for a group of UEs. At step 331, the data delivery tunnel is set up between UE and the UE server. In one embodiment 330, the data delivery tunnel is the UP tunnel or a CP tunnel. At step 341, UE 301 performs measurement based on data collection configuration from the RAN node 302. At step 351, UE 301 sends the data collection response to the UE server 304. In one embodiment, UE 301 attaches the assistant information received from the RAN node 302 to the collected data. At step 361, UE 301 delivers the collected data (attached with assistance information) to the UE server 304 through the data delivery tunnel.

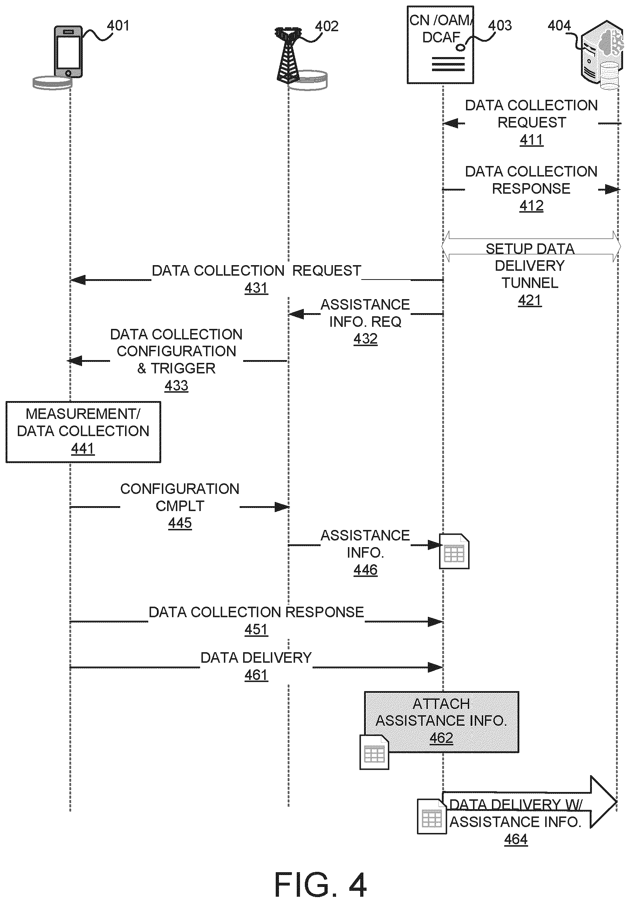

Figure 4 illustrates an exemplary process of data collection triggering from the UE server to the CN in accordance with embodiments of the current invention. UE 401 connects with a RAN node 402 to one or more CN entities 403, which connects with an UE server 404. In one embodiment, the CN entity is a network node/entity/function (e.g., DCAF, CN, OAM, etc.) At step 411, UE server 404 sends the data collection request to a CN entity 403. At step 431, CN entity 403 further sends the data collection request to UE 401. At step 412, CN entity 403, in response to the data collection request, sends data collection response to the UE server 404. At step 421, the data delivery tunnel is set up between CN entity 403 and UE server 404. In one embodiment, the data delivery tunnel is UP tunnel.

At step 432, CN entity 403 sends the data collection assistance information request to the RAN node 402. RAN node 402 provides assistance information to CN entity 403 at step 446. In one embodiment, CN entity 403 performs authorization check and determine whether data collection and data delivery to the UE server is allowed or not. In one embodiment, CN entity 403 also determines what types of data are allowed to be collected and delivered to the UE server. In one embodiment, RAN node 402 provides assistance information relying on the business agreement between RAN and UE server. At step 433, the RAN node 402 sends data collection configuration and triggering to UE 401. At step 441, UE 401 performs data collection based on data collection configuration. At step 445, UE 401 sends configuration complete message to RAN node 402. At step 451, UE 401 sends data collection response to CN entity 403. At step 461, UE 401 delivers the collected data to CN entity 403. In one embodiment, UE 401 interacts with CN entity 403 through the NAS signalling (CP tunnel). In one embodiment, UE 401 interacts with CN entity 403 through the application layer (UP tunnel). In one embodiment, at step 462, CN entity 403 attaches assistance information to the collected data received from UEs, such as UE 401. At step 464, CN entity 403 delivers the collected data (attached with assistance information) to the UE server 404 through data delivery tunnel after authorization check.

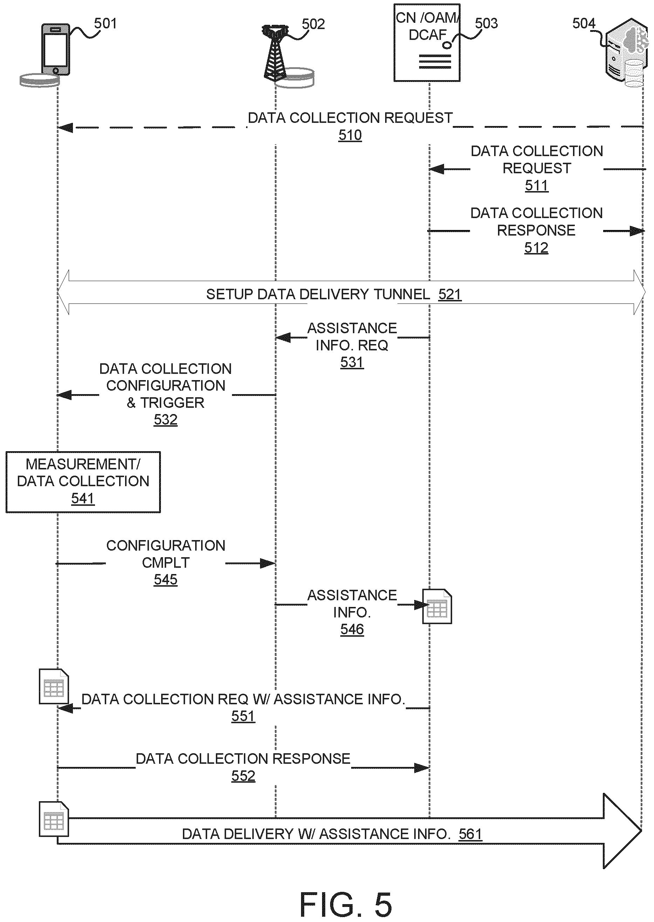

Figure 5 illustrates an exemplary flow of data collection without RAN awareness triggering from the UE server to the CN entity and from the UE server to UE in accordance with embodiments of the current invention. UE 501 connects with RAN node 502 and CN entity 503, which connects with an UE server 504. At step 511, the data collection triggering/ request from the UE server 504 is sent to CN entity 503. At step 512, CN entity 503 sends data collection response to UE server 504. In one embodiment, at step 510, the data collection triggering / request is sent from UE server 505 to UE 501 through the application layer. In one embodiment, at step 521, the data delivery tunnel is set up between UE 501 and the UE server 505. In one embodiment, the data delivery tunnel is the UP tunnel. At step 531, CN entity 503 sends the data collection and assistance information request to the RAN node 502. At step 546, in response, RAN node 502 provides assistance information to CN entity 503 for authorization check. In one embodiment, CN entity 503 performs authorization check and determine whether data collection and data delivery to the UE server is allowed or not. In one embodiment, CN entity 503 also determines what types of data are allowed to be collected and delivered to the UE server 504.

At step 532, RAN node 502 sends data collection configuration and trigger to UE 501. At step 541, UE 501 performs data collection based on the data collection configuration. At step 545, UE 501 sends configuration complete to RAN node 502. In one embodiment, at step 551, CN 503 sends data collection request and assistance information to UE after authorization check. At step 552, UE 501 sends data collection response to the CN entity 503. In one embodiment, UE 501 attaches assistance information with the collected data. At step 561, UE 501 sends the collected data together with the assistance information to the UE server 505 through data delivery tunnel.

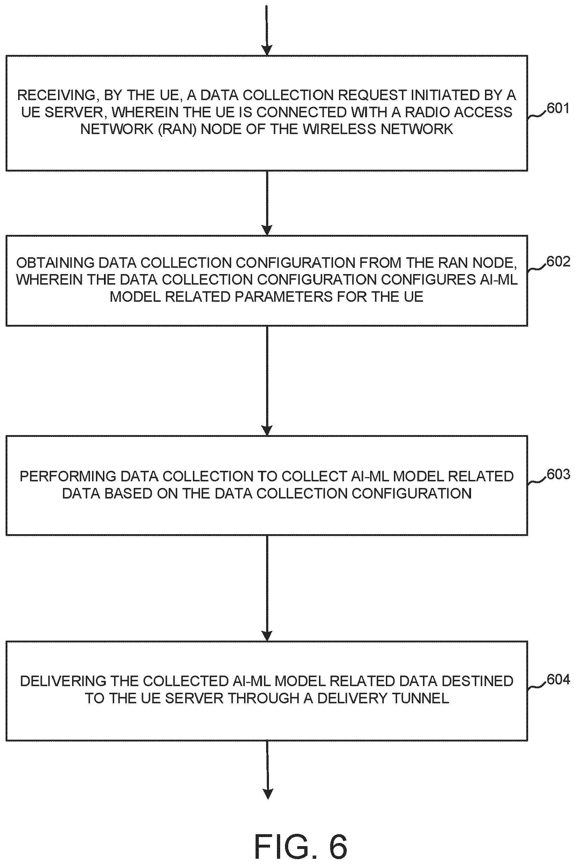

Figure 6 illustrates an exemplary flow chart for the UE to perform the AI-ML data collection in accordance with embodiments of the current invention. At step 601, the UE receives a data collection request initiated by a UE server, wherein the UE is connected with a radio access network (RAN) node of the wireless network. At step 602, the UE obtains data collection configuration from the RAN node, wherein the data collection configuration configures AI-ML model related parameters for the UE. At step 603, the UE performs data collection to collect AI-ML model related data based on the data collection configuration. At step 604, the UE delivers the collected AI-ML model related data destined to the UE server through a delivery tunnel.

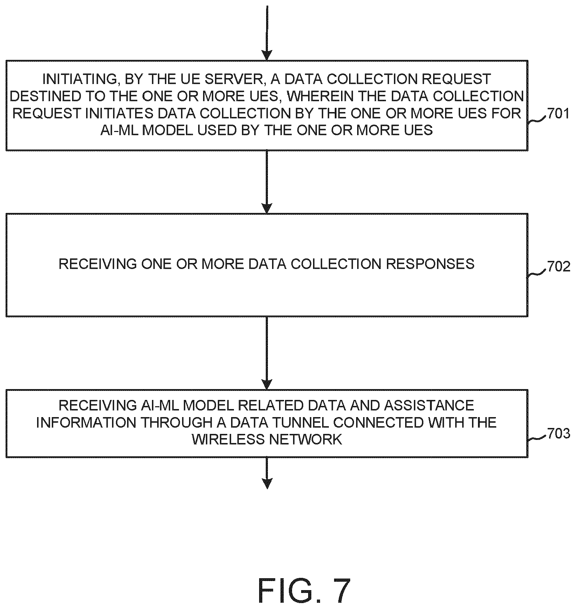

Figure 7 illustrates an exemplary flow chart for the UE server to perform the AI-ML data collection in accordance with embodiments of the current invention. At step 701, the UE server initiates a data collection request destined to the one or more UEs, wherein the data collection request initiates data collection by the one or more UEs for AI-ML model used by the one or more UEs. At step 702, the OTT server receives one or more data collection responses. At step 703, the UE server receives AI-ML model related data and assistance information through a data tunnel connected with the wireless network.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (UE) using artificial intelligence - machine learning (AI-ML) model in a wireless network comprising:
receiving, by the UE, a data collection request initiated by a UE server, wherein the UE is connected with a radio access network (RAN) node of the wireless network;
obtaining data collection configuration from the RAN node, wherein the data collection configuration configures AI-ML model related parameters for the UE;
performing data collection to collect AI-ML model related data based on the data collection configuration; and
delivering the collected AI-ML model related data destined to the UE server through a delivery tunnel.

2. The method of claim 1, wherein the UE receives the data collection request directly from the UE server through an application layer message, and wherein the delivery tunnel is established between the UE and the UE server.

3. The method of claim 2, further comprising:
sending a UE data collection request to the RAN node; and
receiving the data collection configuration and assistance information from the RAN node.

4. The method of claim 3, wherein the assistance information includes one or more elements comprising: use case for the AI-ML model related data, functionality of the AI-ML model related data, scenario information, location information, and RAN configuration information for the AI-ML model related data;
and/or wherein the assistance information is received from the RAN node with unicast or groupcast.

5. The method of claim 3, wherein the UE delivers the assistance information with the collected AI-ML model related data destined to the UE server.

6. The method of claim 2, wherein the delivery tunnel established between the UE and the UE server is a user plane (UP) tunnel or a control plane (CP) tunnel.

7. The method of claim 1, wherein the UE receives the data collection request from a network entity of the wireless network.

8. The method of claim 7, wherein the UE receives the data collection configuration together with a data collection trigger from the RAN node, and wherein the delivery tunnel includes a data path established between the UE and the network entity and a tunnel between the network entity and the UE server.

9. The method of claim 7, wherein the data path between the UE and the network entity is a CP tunnel through a Non-Access-Stratum (NAS) layer or a UP tunnel through an application layer.

10. The method of claim 1, where the UE receives the data collection request with assistance information from a network entity of the wireless network.

11. The method of claim 10, wherein the UE receives the data collection configuration together with a data collection trigger from the RAN node, and wherein the delivery tunnel is established between the UE and the UE server, and wherein the delivery tunnel is a user plane (UP) tunnel or a control plane (CP) tunnel.

12. The method of claim 10, wherein the assistance information includes one or more elements comprising: use case for the AI-ML model related data, functionality of the AI-ML model related data, scenario information, location information, and RAN configuration information for the AI-ML model related data.

13. The method of claim 1, wherein the UE communicates with the RAN node through layer-1 (L1) uplink control information (UCI), L2 MAC control element (CE), radio resource control (RRC) message or a new radio bearer for AI;
and/or wherein the data collection configuration is received from the RAN node with unicast or groupcast.

14. A method for a user equipment (UE) server providing artificial intelligence - machine learning (AI-ML) model for one or more UE in a wireless network comprising:
initiating, by the UE server, a data collection request destined to the one or more UEs, wherein the data collection request initiates data collection by the one or more UEs for AI-ML model used by the one or more UEs;
receiving one or more data collection responses; and
receiving AI-ML model related data and assistance information through a data tunnel connected with the wireless network;
wherein, for example, the data collection request is sent to the one or more UEs directly through an application layer message or to a network entity of the wireless network;
and/or wherein, for example, the assistance information is attached to the AI-ML model related data by corresponding UEs or by a network entity of the wireless network;
and/or wherein, for example, the data tunnel is a direct user plane (UP) tunnel with corresponding UE, a direct control plane (CP) tunnel with corresponding UE, a UP tunnel with a network entity together with a data path to corresponding UE, or a CP tunnel with a network entity together with a data path to corresponding UE.

15. A user equipment (UE), comprising:
a transceiver that transmits and receives radio frequency (RF) signal in a wireless network;
a detection module that receives a data collection request initiated by a UE server, wherein the UE is connected with a radio access network (RAN) node of the wireless network;
a configuration module that obtains data collection configuration from the RAN node, wherein the data collection configuration configures AI-ML model related parameters for the UE;
a collection module that performs data collection to collect AI-ML model related data based on the data collection configuration; and
a delivery module that delivers the collected AI-ML model related data destined to the UE server through a delivery tunnel.
